# EUROPEAN PATENT APPLICATION

(11) **EP 1 583 100 A2**
(43) Date of publication of application: **05.10.2005**
(21) Application number: 04078172.6
(22) Date of filing: 19.11.2004
(51) Int. Cl.: G11B 33/04

(54) **Packaging housing a plurality of plate-like articles**

(30) Priority: 15.03.2004 US 800201
(71) Applicant: Madacy Entertainment Group, Limited, Montreal, Quebec H3R 3LS (CA)
(72) Inventor: Alter, Amos, Montreal, Quebec (CA)
(74) Representative: Jones, Keith William

(57) **Abstract**

A packaging (100) housing a plurality of plate-like articles (A, B, C), such as CDs or DVDs, comprises a plurality similarly shaped and sized pouches (27, 28, 29) joined in series. Each pouch houses a plate-like article and includes an opening (101) through which the article accesses the interior of the pouch. The packaging is foldable between adjoining pouches. The pouches are preferably formed of a paper material, such as 15 point cover stock. The packaging may include a clear plastic cover (102).

The packaging provides an alternative for jewel cases housing multiple CDs which is less demanding on natural resources and may occupy less space in retail outlets. The packaging may be wrapped, thereby to protect the CDs from displacement and damage, yet readily enables access for view by potential purchasers of printed media which is typically inaccessible for view inside wrapped jewel cases.

## Description

This invention is concerned with a packaging housing a plurality of plate-like articles. More particularly, though not exclusively, the present invention concerns a packaging housing a plurality of CDs and/or DVDs.

### BACKGROUND OF THE INVENTION

Packaging of CDs typically comprises a hard plastic box, commonly referred to as a "jewel case", which in turn houses the CD and some printed information. Plastic jewel cases require a significant amount of plastic material to produce them, so rendering them relatively expensive and wasteful of natural resources. Further, where multiple CDs are packaged, the jewel cases, particularly those including 3 or more CDs, tend to be relatively bulky and so take up considerable shelf space, such that even the largest retail stores are not readily willing to display the products for sale.

Further, to avoid displacement and/or damage of the CD housed within the jewel case, the jewel case is usually displayed for sale wrapped in a tight fitting, clear plastic cover. In this embodiment, as only the outside surfaces of the jewel case are readily visible and internal inspection is prevented by the wrapping, a substantial portion of the printed information pertaining to the CD is often sealed inside the plastic jewel case, rendering it unable to be viewed by the consumer prior to purchase.

Efforts to overcome the disadvantages of the jewel case using paper material are disclosed in U.S. Pat. No. 5,085,318 and U.S. Pat. No. 5,154,284. However, these earlier efforts were largely concerned with a single CD and preferably attempted to create some way to allow space for booklets and other printed material to be incorporated therein.

It is an object of the present invention to provide a packaging housing multiple discs which do not suffer one or more of the above problems associated with plastic jewel cases hitherto employed for housing multiple CDs.

### SUMMARY OF THE INVENTION

The invention is as set out in the accompanying claims.

The packaging of the present invention is suitable for housing plate-like articles, and is preferably suitable for housing disc-like articles such as CDs, DVDs and records. However, the packaging of the present invention may also be used to house other plate-like articles such as floppy-discs or mini-discs.

In one particular embodiment, the present invention provides a packaging comprising at least three sleeves of substantially uniform shape and size connected in series, each sleeve housing a CD or DVD and comprising at least one opening through which the CD or DVD accesses the interior of the sleeve. Preferably, the at least one opening, which provides access to the CD or DVD housed within the sleeve, extends substantially perpendicularly to the longest edge of the packaging. The sleeves are preferably constructed from a single sheet of paper material, such as 15 point cover stock paper. Preferably, each sleeve has a window, e.g. of a "half moon" shape, cut out from a wall of the sleeve, which enables a part of the CD or DVD to be viewed in its sleeve. In addition, it is preferred that each sleeve has a tab in at least one edge of the at least one opening of the sleeve, which tab is preferably of a half circle shape of approximately the same size as a thumb print, to assist access to the CD or DVD. One or both of the front and back walls that form each sleeve is preferably provided with printed information and/or design images, such as label copy, performance information, and/or pictures of the artist(s)/actor(s). In addition, the entire packaging is preferably wrapped within a clear plastic cover, for example the packaging is preferably enveloped within a tightly fitted clear plastic heat sealed film.

The present invention provides a number of benefits, including the provision of a packaging for a plurality of CDs which occupies significantly less space than a corresponding plastic multi-CD jewel case. This is beneficial not only for displaying the CDs but also for transporting them. Being made of a paper material, the packaging is less demanding on natural resources than a plastic jewel case. Further, the present invention, being preferably formed from a single piece of material, minimizes the amount of paper material necessary to effectively and safely package CDs. The packaging sleeve preferably utilizes a single-fold design with a sleeve and cover portion.

Additional benefits may be derived when the packaging is wrapped within a clear plastics cover. For example, when the cover is fitted to enable both sides of each pouch or sleeve to be viewed by the consumer without first cutting, removing or otherwise damaging the cover, the packaging remains intact and so the CDs are not damaged or displaced with frequent opening and closing by the consumer during display in a retail outlet. Further, in this particular embodiment, the wrapped packaging provides more surface area, than the surface area provided on the two outside surfaces on a wrapped jewel case, so enabling the packaging to carry more printed information and pictures which can be readily and repeatedly viewed by the consumer by opening and closing the wrapped packaging.

The invention shall now be described further by way of exemplification and with reference to the accompanying drawings in which:
Fig 1 is a pictorial view of a die-cut sheet of paper;
Fig 2a) is a pictorial view of a die-cut sheet of paper indicating the direction of folds;
Fig 2b) is a pictorial view of packaging comprising three pouches formed in series;
Fig 3 is a pictorial view of an embodiment of the packaging of the present invention;
Fig 4 is pictorial view of the embodiment of the present invention shown in Fig 3 indicating the provision of a cover;
Fig 5 is a pictorial view of the embodiment of the present invention shown in Fig 4 with the cover in position; and
Figs 6A and 6A are pictorial views of the embodiment of the present invention shown in Fig 5 in different states of folding.

### DETAILED DESCRIPTION OF THE INVENTION

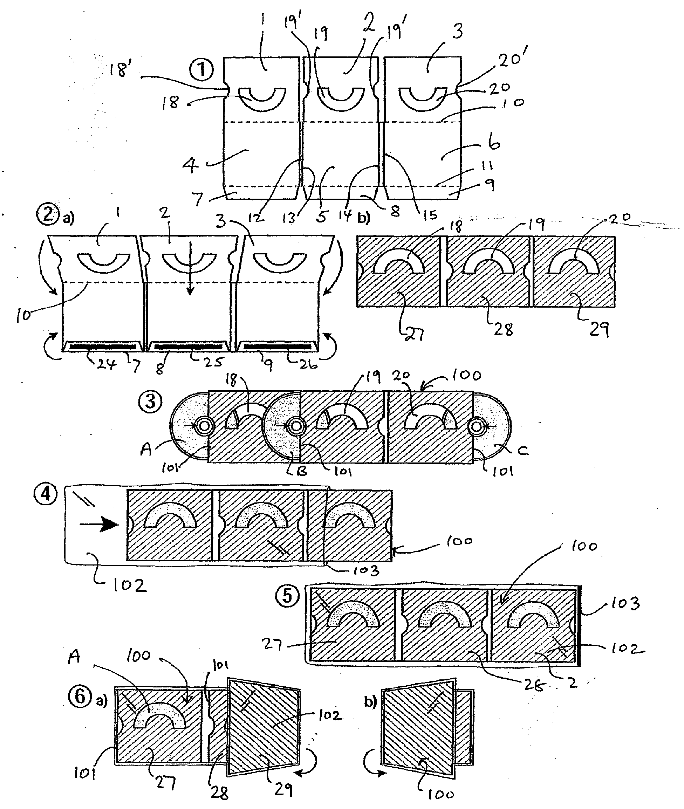

Referring now to Fig 1, a unitary die-cut sheet of 15 point cover stock paper, including a printed side and a blank side, is shown laid flat with the printed side down. The sheet comprises three center panels 4, 5 and 6 wherein three viewing panels 1, 2 and 3 and three adhering tabs 7, 8 and 9 are integrally attached thereto on opposite edges of the center panels. The sheet is provided with a first horizontal fold line 10 between center panels 4, 5 and 6 and viewing panels 1, 2 and 3, and a second horizontal fold line 11 between center panels 4, 5 and 6 and adhering tabs 7, 8 and 9. The sheet is further provided with parallel fold lines 12 and 13 and 14 and 15 between center panels 4 and 5 and 5 and 6, respectively.

In each of viewing panels 1, 2 and 3 are provided "half-moon" shaped die cut windows 18, 19 and 20. In addition, viewing panels 1, 2 and 3 each contain thumb tabs 18', 19' and 20' cut into the edges thereof.

Fig 2a shows the first stages of assembly. Firstly, adhesive glue strips 24, 25 and 26 are applied to the printed side of adhering tabs 7, 8 and 9. These adhering tabs are then folded upwards along fold line 11, over the vertical and then downwards until the tabs are folded almost back onto the center panels. Viewing panels 1, 2 and 3 are then folded upwards along fold line 10, over the vertical and then downwards until their outer edges come into contact with the adhesive glue strips 24, 25 and 26, of the adhering tabs 7, 8 and 9, respectively, when they become affixed thereto and so form three separate pouches or containment sleeves 27, 28 and 29 joined in series, as shown in Fig 2b).

Fig 3 shows three CDs A, B and C being inserted in the containment sleeves 27, 28 and 29 through the side openings 101, which extend perpendicularly to the longest edge dimension 103, thus forming the packaging of the present invention 100. Part of each of CDs A, B and C is visible through the three respective die-cut windows 18, 19 and 20.

Fig 4 shows the packaging of the invention shown in Fig 3 being inserted into the opening of a clear plastic bag 102. When the packaging is fully inserted into the bag 102, the open end 103 is heat sealed closed, thus enclosing the packaging of the present invention in a heat sealed, tightly fitted clear plastic cover, as shown in Fig 5.

Figs 6A and 6B show the covered packaging being folded firstly along lines 14 and 15, and then along lines 12 and 13.

The assembled packaging of the present invention enables the three CDs to be readily and repeatedly viewed by the consumer by opening and closing containment sleeves 27 and 29.

In so doing, the consumer will be readily able to read or view any printed matter on the packaging without damaging or displacing the CDs inside of the containment sleeves.

The packaging may carry printed indicia on its various surfaces to convey information and/or design work to attract a consumer to the product. These printed indicia are preferably printed directly on the printed side of the sheet of paper material used to form the packaging. One of the advantages of the packaging is that all aforementioned printed surfaces, as well as a portion of the actual discs thru the die cut windows can be readily and repeatedly viewed by the consumer by opening and closing the sealed packaging. In addition, the tightly sealed plastic bag ensures that the CDs are not damaged or displaced with frequent opening and closing by the consumer.

## Claims

1. A packaging (100) housing a plurality of plate-like articles (A, B, C), such as CDs, floppy -discs and DVDs, comprising at least three pouches (27, 28, 29) of substantially uniform shape and size joined in series, wherein each pouch houses at least a part of a plate-like article within it and comprises at least one opening (101) through which the at least a part of the plate-like article accesses the interior of the pouch, and wherein the packaging is foldable between adjoining pouches.

2. A packaging as claimed in any one of the preceding claims, wherein the pouches are formed from a paper material, such as 15 point cover stock paper.

3. A packaging as claimed in claim 2, wherein the pouches are formed integrally from a single sheet of paper material.

4. A packaging as claimed in claim 3, wherein the packaging is foldable between adjoining pouches along fold lines formed in the paper.

5. A packaging as claimed in any one of the preceding claims, wherein the pouches are sleeves and the plate-like articles are housed completely within the sleeves.

6. A packaging as claimed in claim 5, wherein the said at least one opening in each sleeve, through which a plate-like article accesses the interior of the sleeve, extends substantially perpendicularly to the longest edge dimension of the unfolded packaging.

7. A packaging as claimed in claim 5 or claim 6, wherein each sleeve has a window, e.g. of a "half moon" shape, in a wall of the sleeve, which enables a part of the plate-like article housed within the sleeve to be viewed.

8. A packaging as claimed in any one of the preceding claims, wherein each pouch has a tab in at least one edge of the at least one opening of the pouch.

9. A packaging as claimed in any one of the preceding claims, wherein the packaging further includes a clear plastic cover (102), preferably a shrink-wrapped cover, which envelopes each of the said at least three pouches.

10. A packaging as claimed in any one of the preceding claims, wherein one or both of the exterior walls of one or more of the pouches is/are provided with printed information and/or design images, such as label copy, performance information, and pictures of the artist(s)/actor(s).

11. A method of forming a packaging as claimed in claim 9, wherein the method comprises forming a packaging as claimed in any one of claims 1 to 8, and wrapping the entire packaging so formed in a clear plastic film.

12. A method as claimed in claim 12, wherein the packaging is wrapped in the clear plastic film and subsequently folded between adjoining pouches.

13. A method as claimed in claim 12, wherein the packaging is folded between adjoing pouches and subsequently wrapped in the clear plastic film.

14. A method as claimed in any one of claims 11-13, wherein the clear plastics film is shrink-wrapped around the entire packaging.
